# EUROPÄISCHE PATENTANMELDUNG

(11) **EP 2 554 496 A1**
(43) Veröffentlichungstag der Anmeldung: **06.02.2013**
(21) Anmeldenummer: 11008319.3
(22) Anmeldetag: 14.10.2011
(51) Int. Cl.: B65G 1/137

(54) **Kommissionierleitsystem für ein Lager, Verfahren zur Kommissionierung von in einem Lager befindlichen Lagerteilen sowie Computerprogramm zur Ausführung eines solchen Verfahrens**

(30) Priorität: 04.08.2011 DE 102011109366
(71) Anmelder: TriAhead GmbH, 63073 Offenbach am Main (DE)
(72) Erfinder: Rinza, Tobias, 63073 Ofenbach am Main (DE)
(74) Vertreter: Springorum, Harald

(57) **Zusammenfassung**

Kommissionierleitsystem für ein Lager mit einem Computersystem zur Leitung der Kommissionierung von Lagerteilen (**50a**, **50b**) im Lager mit mindestens einer Datenverarbeitungseinheit und mindestens einem Speicher, mit einem Lichtprojektor (**80a**) oder mehreren Lichtprojektoren (**80a**, **80b**, **80c**), der jeweilig einen Lagerbereich abdeckt und der ine Anzeige eines Weges oder Richtungshinweises (**100a**) oder Ortshinweises (**100b**) zu einem Lagerplatz (**60a**, **60b**, **60c**) hin oder eine Anzeige des Lagerplatzes oder auf dem Lagerplatz (**100c**) oder an dem Lagerplatz (**60a**, **60b**, **60c**) oder eine Anzeige eines Weges oder Richtungshinweises (**100a**) oder Ortshinweises (**100b**) von dem Lagerplatz weg projiziert, wobei der jeweilige Lichtprojektor (**80a**, **80b**, **80c**) zur Abdeckung des Lagerbereiches beweglich ist und während der Kommissionierung im Lager durch das Computersystem zur Leitung der Kommissionierung von Lagerteilen (**50a**, **50b**) im Lager direkt oder indirekt so angesteuert wird, daß der Lichtprojektor (**80a**, **80b**, **80c**) so positioniert, daß er die zur Kommissionierung von Lagerteilen (**50a**, **50b**) jeweilig vorgesehene Weganzeige (**100a**) oder den jeweiligen Richtungs- (**100a**) oder Ortshinweis (**100b**) zu dem Lagerplatz (**60a**, **60b**, **60c**) hin oder von dem Lagerplatz (**60a**, **60b**, **60c**) weg oder die Anzeige des Lagerplatzes oder die Anzeige auf (**100c**) oder an dem Lagerplatz erkennbar projizieren kann sowie Verfahren und Computerprogramm zum Betrieb eines solchen Kommissioniersystems.

## Beschreibung

Die Erfindung betrifft ein Kommissionierleitsystem für ein Lager, ein Verfahren zur Kommissionierung von in einem Lager befindlichen Lagerteilen mit einem Kommissionierleitsystem sowie ein Computerprogramm zur Ausführung eines solchen Verfahrens.

Bei der Kommissionierung von Lagerteilen, also der Entnahme von Lagerteilen aus einem Lager wie auch dem Einlagern (etwa Einstellen oder Hineinlegen) von Lagerteilen in ein Lager bzw. einen Lagerplatz werden, insbesondere im Falle vielfältiger, aber womöglich ähnlicher bzw. schwer eindeutig identifizierbarer Lagerteile immer wieder menschliche Fehler gemacht, weil der Lagerist Lagerteile und/oder Lagerplätze verwechselt und/oder Entnahme- oder Einlagermengen der Lagerteile falsch versteht oder falsch handhabt.

Derartige Probleme lassen sich zwar mit Hilfe von vollautomatisch arbeitenden Lagern (etwa automatische Hochregallager oder automatische Karton- bzw. Kleinteilelager [AKL]) vermeiden, jedoch sind derartige Lager nicht für jeden Einsatzzweck geeignet. So ist es etwa schwierig, komplexe Teile (z.B. vielfältige Kleinteile, Teile mit anspruchsvoller Kubatur, kompliziert zu greifende Teile etc.) Teil für Teil und nicht etwa nur nach genormten Verpackungseinheiten zu kommissionieren (Man denke in diesem Zusammenhang beispielsweise nur an die einzelteilorientierte Entnahme in einem Versandhandelslager!). Auch ist eine solche vollautomatische Einzelteilkommissionierung mitunter zwar möglich (z.B. durch Roboterkommissionierung), jedoch im Einzelfall zu kostenintensiv.

Vor diesem Hintergrund wurden Systeme zur halbautomatischen Kommissionierung oder Kommissionierungsunterstützung entwickelt, die die durch den Menschen oftmals hervorgerufene Kommissionierfehlerrate durch eine geeignete Leitung des Lagerristen im Lager senken sollen, indem sie ihm eine gewisse Hilfestellung bieten, ohne jedoch den Kommissioniervorgang vollständig zu automatisieren

Aus dem Stand der Technik sind hier verschiedene Systeme bekannt:
So ist ein System der Fa. Z-Laser Optoelektronik GmbH unter der Bezeichnung LP-CUBE bekannt, der über dem nach dem "Ware-zum-Mann"-Prinzip eingerichteten Kommissionierarbeitsplatz eines Tablarlagers angebracht ist und verschiedener Projektionsfiguren, wie etwa Buchstaben, Zahlen oder auch Texte, die jeweils anvisierte Entnahmefläche, von der Teile entnommen oder in die sie eingelagert werden sollen, markiert. Dabei können dem Kommissionierer auch der Name oder die Nummer des Artikels angezeigt werden.

Ein weiteres aus dem Stand der Technik bekanntes derartiges System stellt das unter der Bezeichnung LaserPick™ vertriebene System der Fa. Innovative Picking Technologies aus den Vereinigten Staaten von Amerika dar, bei dem ein hoch-intensiver Laserstrahl auf Reflektoren gerichtet wird, die jeweilig einzelnen Lagerfächern zugeordnet sind, um so das jeweilige Lagerfach anzuzeigen, in das ein Tel eingelagert oder aus dem ein Teil entnommen werden soll.

Den vorgenannten Systemen ist jedoch der Nachteil zu eigen, daß es sich um fixe Installationen handelt, die somit nur eine sehr eingeschränkte Kommissionierfläche (auch sogenannte Pickfront genannt [zu deutsch Kommissionierfront]) abdecken. Im Falle der nach dem Prinzip "Ware-zum-Mann" operierenden Kommissionierarbeitsplätze ist dies u.U. hinnehmbar (beispielsweise bei einem Tablarlager, bei dem der Laserstrahl von oben einen bestimmten unter ihm befindlichen Bereich abdecken muß und sich der hiermit ausgerüstete Kommissionierarbeitsplatz ohnehin nur auf diesen Lagerbereich erstreckt). Im Falle größerer Lager, etwa bei nach dem Ansatz "Mann-zur-Ware" operierenden, zumeist größeren Lägern mit großer Pickfront stellt dies jedoch keine wirtschaftliche Lösung dar.

Aus diesem Grunde wählt der Hersteller des LaserPick™-Systems denn auch in diesen Fällen eine Lösung, bei der er verschiedene Laser fest montiert nebeneinander anordnet, so daß sie insgesamt gesehen auch einen größeren Bereich abzudecken in der Lage sind. Die Nachteile eines solchen Vorgehens liegen jedoch auf der Hand: Zum einen benötigt ein solches System etliche Laserstrahlprojektoren, was die Kosten hierfür nach oben treibt und zum anderen - was wohl noch schwerer wiegen dürfte - ist eine solche Anordnung fest montierter mehrerer Laser recht unflexibel und allenfalls für die in diesem System - quasi als Gegenstück zum Laserprojektor an festen Orten montierten Reflektoren - geeignet.

Ein System, das diese Nachteile vermeidet, ist jedoch ebenfalls im Stand der Technik bekannt: Unter der Bezeichnung Kisoft Vision bietet die Knapp Systemintegration GmbH ein sogenanntes Cyber-Kommissioniersystem an, bei dem der Kommissionierer eine sogenannte Cyber-Brille trägt, wie sie etwa aus Computerspielen bekannt ist. Über diese Brille werden dem Kommissionierer sodann während des Kommissioniervorganges Hinweise von einem Computersystem zur Leitung der Kommissionierung in seine Wahrnehmung der Realität, also des Lagers mit seinen Lagerplätzen eingeblendet, die den Kommissioniervorgang den Kommissionierer unterstützend leiten sollen. Dabei können etwa Pfeile, Wegweiser, markierte Lagerplätze, Anzahl der zu kommissionierenden Stücke vermittels der sogenannten Cyber-Brille in das auf Teile des Lagers gerichtete Sichtfeld des menschlichen Kommissionierers eingeblendet werden.

Ein solches System vermag zwar die zuvor genannten Nachteile der unzureichenden Lagerbereichsabdeckung bei gleichzeitiger Flexibilität hinsichtlich der Ausrichtung auf unterschiedliche Lagerplätze zu vermeiden, dies freilich um den Preis hoher Kosten für die hierzu erforderliche technische Ausstattung, die für jeden kommissionierenden Lagerristen einen Computer erfordert, der über eine ausreichend hohe Rechenleistung verfügt, die erforderliche sogenannte virtuelle Realität nicht nur zu erzeugen, sondern zudem auch in die Realität abzubilden. Zudem werden teure Peripheriegeräte für jeden kommissionierenden Lagerristen erforderlich, wobei nicht nur die sogenannte Cyber-Brille Verwendung findet, sondern zudem auch noch ein (dreidimensionales) Lageerfassungssystem hinreichender Genauigkeit und/oder ein oder mehrere Kameras zum Abgleich der virtuellen Hinweise mit der Lagerrealität erforderlich sind. All dies stellt aber nicht nur einen Kostenfaktor dar, sondern weist eine ganze Reihe technisch bedingter Nachteile auf. So ist es erforderlich, immer eine hinreichend stabile und für die Bildübertragung breitbandige Datenverbindung zum Kommissionierer aufrecht zu erhalten, dessen entsprechend aufwändige Gerätschaften zudem auch über eine ausreichende Energieversorgung verfügen müssen. Für den Fall von Geräteausfällen müssen hinreichend (mobile) Ersatzgeräte vorgehalten werden, was die Kosten weiter steigert. Hinzu tritt das Problem, daß viele Menschen Sehstörungen haben, die zumeist mit einer individuellen für sie jeweilig angepaßten Brille behoben werden. Die Verwendung einer Cyberbrille ist in diesen Fällen aber problematisch, da sie nur sehr eingeschränkt zusammen mit herkömmlichen Brillengestellen verwendet werden können und das hierzu alternative Tragen von Kontaktlinsen nicht für jeden geeignet und auch nicht von jedem gewünscht ist. Zwar können nach diesseitiger Kenntnis sogenannte Cyber-Brillen auch für unterschiedliche Sehfehler auch individuell gefertigt werden, dies ist jedoch sehr teuer und erzeugt ein weiteres Vorhalteproblem für jeden betroffenen Kommissionierer. Angesichts der hohen Zahl fehlsichtiger Menschen stellt dies - neben den eingangs bereits erwähnten hohen Kosten und der zu gewährleistenden Systemstabilität - ein schwerwiegendes praktisches Problem derartiger anspruchsvoller Lagerleitsysteme dar.

Vor diesem Hintergrund des Standes der Technik ist es daher Aufgabe der vorliegenden Erfindung ein Kommissionierleitsystem für ein Lager anzugeben, das einerseits in der Lage ist, größere Lagerbereiche mit ausreichender Flexibilität im Hinblick auf die Lage der Lagerplätze abzudecken, andererseits aber die hohen Kosten und technischen Schwierigkeiten von Systemen, die von der Darstellung sogenannter virtueller Realität Gebrauch machen und deren Anpassungsschwierigkeiten an menschliche Bedürfnisse, insbesondere Fehlsichtigkeiten zu vermeiden.

Diese Aufgabe wird durch ein Kommissionierleitsystem für ein Lager
- mit einem Computersystem zur Leitung der Kommissionierung von Lagerteilen im Lager mit mindestens einer Datenverarbeitungseinheit und mindestens einem Speicher und
- mit einem Lichtprojektor oder mehreren Lichtprojektoren gelöst, wobei der jeweilige Lichtprojektor (jeweilig) einen Lagerbereich abdeckt, der (jeweilig)
   - eine Anzeige eines Weges oder Richtungshinweises oder Ortshinweises zu einem Lagerplatz hin oder
   - eine Anzeige des Lagerplatzes oder auf dem Lagerplatz oder an dem Lagerplatz oder
   - eine Anzeige eines Weges oder Richtungshinweises oder Ortshinweises von dem Lagerplatz weg
projiziert, das erfindungsgemäß dadurch gekennzeichnet ist, daß der (jeweilige) Lichtprojektor zur Abdeckung des Lagerbereiches beweglich ist und während der Kommissionierung im Lager durch das Computersystem zur Leitung der Kommissionierung von Lagerteilen im Lager direkt oder indirekt so angesteuert wird, daß der Lichtprojektor so positioniert (wird), daß er die zur Kommissionierung von Lagerteilen jeweilig vorgesehene Weganzeige oder den jeweiligen Richtungs- oder Ortshinweis zu dem Lagerplatz hin oder von dem Lagerplatz weg oder die Anzeige des Lagerplatzes oder die Anzeige auf oder an dem Lagerplatz erkennbar projizieren kann.

Den Lichtprojektor beweglich auszustatten ermöglicht einerseits größere Lagerbereiche abzudecken, indem der Projektor in den jeweils erforderlichen Bereich des Lagers positioniert wird, andererseits wird so aber auch eine hohe Flexibilität im Hinblick auf die Anpassung der Projektion an die Lagerplätze erreicht, da diese somit keinem festen Anordnungsraster folgen müssen. Vielmehr ist es möglich, die Positionierung des Projektors so vorzunehmen, daß er auch ungleichmäßigen Lagerplatzverteilungen folgen kann, soweit entsprechende Positionsangaben hinterlegt sind. Ein solcher beweglicher Projektor ist weit einfacher realisierbar als die bereits erwähnten Virtual Reality (VR) Systeme, die von der Darstellung sogenannter virtueller Realität Gebrauch machen und vermeidet deren aufwendige Programmierung und bereits beschriebene technische Schwierigkeiten, insbesondere deren Adaptierbarkeit an menschliche Bedürfnisse, wie etwa Fehlsichtigkeiten, da die Anzeigen eines Projektionssystems ohne spezielle Hilfsmittel für jeden sehenden Menschen erkennbar sind.

Ferner dient der Lösung der Aufgabe auch ein Verfahren zur Kommissionierung von in einem Lager befindlichen Lagerteilen mit einem Kommissionierleitsystem nach der vorliegenden Erfindung, das erfindungsgemäß dadurch gekennzeichnet ist, daß jeweils vor der Kommissionierung des am nächsten Lagerplatz zu kommissionierenden Lagerteiles oder der dort nächst zu kommissionierenden Lagerteile der zur Abdeckung eines Lagerbereiches bewegliche Lichtprojektor durch das Computersystem zur Leitung der Kommissionierung unmittelbar oder mittelbar so angesteuert wird, daß er so positioniert wird, daß er die zum nächsten Lagerplatz jeweilig vorgesehene Weganzeige oder den jeweiligen Richtungs- oder Ortshinweis zum nächsten Lagerplatz hin oder von einem aktuellen Lagerplatz weg oder die Anzeige des nächsten Lagerplatzes oder die Anzeige auf oder an dem nächsten Lagerplatz erkennbar projizieren kann. Auch ist ein Computerprogramm zur Durchführung dieses Verfahrens nach der vorliegenden Erfindung vorgesehen.

Das erfindungsgemäße Kommissionierleitsystem weist als Lichtprojektor vorzugsweise ein Projektionssystem mit einer Laserstrahlquelle auf, weil eine solche aufgrund ihrer hohen Bündelung eine hohe Positioniergenauigkeit und Abbildungsschärfe gewährleisten kann, wobei zudem die Möglichkeit gegeben ist, bei sich schnell bzw. oszillierend bewegendem Laserstrahl ein stehendes Bild zu erzeugen und so zusätzliche Informationen zu vermitteln. Auch sind derartige Laser heute mit einer Leistung verfügbar, die trotz guter Erkennbarkeit der durch sie erzeugten Abbilder keine Gesundheitsgefährdung für Menschen in ihrem Arbeitsbereich darstellen, da sie auch für den Fall, daß sie ins Auge fallen sollten, keine (bleibenden) Schäden hervorrufen.

Besonders bevorzugterweise wird dabei als Projektionssystem ein solches verwendet, das mit einer auf einer Verfahreinheit angeordneten Laserstrahlquelle mit zumindest einem Umlenkprisma oder Umlenkspiegel arbeitet. Derartige Verfahreinheiten können auf Schienensystem, vorzugsweise auf Deckenschienensystemen angebracht und dann leicht entlang der verlegten Schienen verfahren und positioniert werden, wobei die Schiene (die Schienen) so angeordnet ist (sind), daß der Lichtstrahl des auf der Verfahreinheit auf der Schiene angeordneten Projektionssystems den jeweiligen Lagerplatz, auf den oder an dem der Projektor eine Anzeige projiziert, direkt anstrahlen kann. Es versteht sich, daß als verfahrbare Projektionssysteme nicht nur solche mit einem Laserstrahl als Lichtquelle, sondern natürlich auch andere Lichtprojektoren geeignet sind.

In einer bevorzugten Ausführungsform weist das Kommissionierleitsystem nach der vorliegenden Erfindung auch ein Erfassungssystem für die Erfassung der jeweils an dem Lagerplatz kommissionierten Lagerteile auf, das mit dem Computersystem zur Leitung der Kommissionierung von Lagerteilen im Lager unmittelbar oder mittelbar (leitungsgebunden oder leitungslos [etwa über Funk]) verbunden ist. Vorzugsweise ist es mit dem Computersystem zur Leitung der Kommissionierung von Lagerteilen im Lager über eine Datenverbindung (besonders bevorzugterweise über eine Datenleitung oder ein Datennetzwerk) verbunden und kommuniziert mit diesem hierüber. Hiermit können dann die kommisionierten (also die ein- oder ausgelagerten) Lagerteile an das Computersystem zur Leitung der Kommissionierung übermittelt und dort verbucht werden. Neben der für die allgemeine Lagerhaltung natürlich wichtigen Verbuchung der ein- oder ausgelagerten Lagerteile ist die vorgenannte Erfassung aber auch für die vorliegende Erfindung von Bedeutung. Durch die Erfassung des jeweiligen Kommissioniervorgangs am jeweiligen Lagerplatz wird dem Kommissionierleitsystem nämlich auch zugleich signalisiert, daß der Kommissioniervorgang an dem jeweiligen Lagerplatz erfolgt ist und am nächsten Lagerplatz fortgesetzt werden kann. Die Erfassung der Kommissionierung, also das Einlagern und/oder Entnehmen der Teile stellt somit zugleich das Signal für das Leitsystem dar, den Lichtprojektor in die nächste Position verbringen zu können, von der aus er die für Kommissionierung am nächsten Lagerplatz vorgesehenen Anzeigen projizieren kann.

Entsprechend kann das erfindungsgemäße Verfahren zur Kommissionierung von in einem Lager befindlichen Teilen, wenn es mit der vorerwähnten Ausführungsform des erfindungsgemäßen Kommissionierleitsystem arbeitet, so ausgestaltet sein, daß das an einem Lagerplatz zu kommissionierende Lagerteil oder die dort zu kommissionierenden Lagerteile mithilfe des Erfassungssystems erfaßt und an das Computersystem zur Leitung der Kommissionierung von Lagerteilen im Lager übertragen werden, das daraufhin den beweglichen Lichtprojektor unmittelbar oder mittelbar so ansteuert, daß er so positioniert wird, daß er die zum nächsten Lagerplatz jeweilig vorgesehene Weganzeige oder den jeweiligen Richtungs- oder Ortshinweis zum nächsten Lagerplatz hin oder von dem aktuellen Lagerplatz weg oder die Anzeige des nächsten Lagerplatzes oder die Anzeige auf oder an dem nächsten Lagerplatz erkennbar projizieren kann.

In einer bevorzugten Ausführungsform des Verfahrens zur Kommissionierung von in einem Lager befindlichen Teilen nach der vorliegenden Erfindung ist es so, daß der Lichtprojektor, nachdem er so positioniert wurde, daß er die zum nächsten Lagerplatz jeweilig vorgesehene Weganzeige oder den jeweiligen Richtungs- oder Ortshinweis zum nächsten Lagerplatz hin oder von dem aktuellen Lagerplatz weg oder die Anzeige des nächsten Lagerplatzes oder die Anzeige auf oder an dem nächsten Lagerplatz erkennbar projizieren kann,
- eine Anzeige eines Weges oder Richtungshinweises oder Ortshinweises zu dem nächsten Lagerplatz hin oder
- eine Anzeige des nächsten Lagerplatzes oder auf dem nächsten Lagerplatz oder an dem nächsten Lagerplatz - vorzugsweise (auch) zusätzliche Informationen wie die zu entnehmenden Artikel oder die Anzahl der zu kommissionierenden Teile - oder
- eine Anzeige eines Weges oder Richtungshinweises oder Ortshinweises von dem aktuellen Lagerplatz weg
projiziert, was den Kommissionierer während des Kommisioniervorgangs besonders effektiv und effizient durch das Lager leitet. In diesem Zusammenhang sei erwähnt, daß die Postionierung des Lichtprojektors zur Abdeckung eines bestimmten Lagerbereiches für die Zwecke der Projektion nicht unbedingt als Start-Stop-Bewegung ausgestaltet sein muß, wenngleich dies für viele Fälle vorteilhaft sein kann. Vielmehr versteht die vorliegende Erfindung unter einer Positionierung des Lichtprojektors auch eine Bewegung. Dies bedeutet insbesondere auch, daß die Projektion durch den Lichtprojektor auch während dessen Bewegung erfolgen kann.

In einer weiteren bevorzugten Ausführungsform des Verfahrens zur Kommissionierung von in einem Lager befindlichen Teilen nach der vorliegenden Erfindung projiziert der Lichtprojektor auf dem nächsten Lagerplatz oder an dem nächsten Lagerplatz die Anzahl der dort zu kommissionierenden Lagerteile, wobei unter Kommissionierung im Sinne der vorliegenden Erfindung sowohl eine Entnahme eines Lagerteils aus oder von einem Lagerplatz als auch ein Einstellen oder Einlegen von einem Lagerteil in das Lager verstanden wird, was vorzugsweise von dem Erfassungssystem erfaßt wird.

Als Erfassungssystem kann ein (mobiles) Datenterminal vorgesehen sein, das etwa eine manuelle Eingabemöglichkeit aufweisen kann. Auch kann es vorzugsweise (auch nur) ein Lese- oder Schreibgerät für eine Chipkarte, Magnetkarte, einen Barcode-Leser oder ein elektronisch lesbares Etikett oder einen RFID-Transponder aufweisen. Mit Hilfe dieser Einrichtungen ist es etwa möglich die Fehlerrate beim Kommissionieren weiter zu senken, etwa indem eine Chipkarte oder Magnetkarte am Lagerplatz in einem Behältnis, etwa einem Einsteckfach vorgesehen ist und nur noch in das (mobile) Datenerfassungsterminal eingeführt werden kann, um die Kennung des Lagerteils zu erfassen. Der Mensch braucht dann nur noch die Anzahl der kommissionierten Teile einzugeben. Gleiches ist z.B. auch durch das Scannen eines Barcodes (mit Hilfe des Barcode-Lesers) möglich. Unter einer Chipkarte wird dabei hier nicht nur eine handelsübliche Karte im Kreditkartenformat verstanden, sondern auch jeder andere geeignete Träger einer automatisch lesabaren Identifikation, also etwa ein USB-Stick oder ein Steckschlüssel mit entsprechendem Chip etc.. Mit Hilfe dieser Einrichtungen ist es möglich, die Fehlerrate beim Kommissionieren weiter zu senken, etwa indem eine automatisierte Erfassung (z.B Scan) des spezifischen Lagerfaches erfolgt (etwa Sicherstellung der richtigen Position) und/oder Erkennung des zu entnehmenden Lagerteils (etwa Sicherstellung der richtigen Artikelnummer und der richtigen Entnahmemenge).

Noch vorteilhafter ist allerdings die Verwendung eines Lesegerätes für RFID-Transponder, also eines Lesegerätes für drahtlos auslesbare (vorzugsweise auch beschreibbare) Microchips (sogenannte Transponder), da die Transponder auf Etiketten an den einzelnen Teilen angebracht werden können und so vollautomatisch durch das Datenterminal bei der Kommissionierung erfaßt werden können, etwa indem die Teile in eine bestimmte Nähe zum Terminal gebracht werden, was z.B. durch einen Signalton bestätigt wird. Diese Art der Kommissionierung senkt die Fehlerrate dadurch weiter, daß hierbei nicht einmal mehr die Anzahl der Teile manuell erfaßt werden muß. Ähnlich wie eine solche Datenerfassung vermittels RFID kann sie auch mithilfe von elektronisch lesbaren Etiketten, wie etwa Barcodes geschehen, wobei diese jeweils mit einem entsprechenden Lesegerät erfaßt werden müssen.

Die auch gegebene Möglichkeit Magnet- oder Chipkarten oder dergleichen oder auch RFID-Transponder zu beschreiben kann etwa dazu genutzt werden Daten auf diesem Datenträger abzulegen, etwa die neue aktuelle Anzahl der am zugeordneten Lagerplatz eingelagerten Lagerteile, die mit dem zentralen Datenbestand des Lagers abgeglichen werden können und so etwa für Inventur arbeiten unter Kontrollgesichtspunkten nützlich sein können. Der Abgleich kann dabei online (also [weitgehend] ständig mit dem Rechner verbunden, der den zentralen Datenbestand verwaltet) fortlaufend oder auch online oder nur gelegentlich mit dem Rechner verbunden, der den zentralen Datenbestand verwaltet, und in zeitlichen Abständen erfolgt

Das Datenterminal ist vorzugsweise über eine drahtlose Verbindung mit dem Computersystem zur Leitung der Kommissionierung von Lagerteilen im Lager zwecks Kommunikation mit diesem verbunden, da so störende Kabel vermieden werden. Bevorzugterweise finden hierfür drahtlose Kommunikationsnetzwerke, wie etwa drahtlose sogenannte LANs Verwendung, die infolge der Verwendung von Verschlüsselungsverfahren auch ausreichende Sicherheit bei der Übertragung der jeweiligen Daten bieten.

Wie bereits erwähnt, kann als Erfassungssystem (auch) ein Lese- oder Schreibgerät für RFID-Transponder vorgesehen sein; dies aber nicht nur im Rahmen der Verwendung eines (mobilen) Datenerfassungsterminals, sondern vielmehr (auch) als fest installierte Einheit. Im Falle eines Lagers mit Regalgängen kann dabei ein solches Gerät jeweils an zumindest einem Zugang eines Regalganges angeordnet sein, was die Möglichkeit eröffnet, daß die im jeweiligen Regalgang entnommenen oder eingelagerten Teile automatisch beim Passieren des Gerätes - z.B. ähnlich wie an einer Warensicherheitsschleuse im Einzelhandel - erfaßt und zugleich Bestandsbuchungen vorgenommen werden, indem der Differenzbestand zwischen dem aktuellen und dem vorherigen Passieren gebildet wird. Stellt man sicher, daß der jeweilige Regalgang nur über den Bereich eines solchen Gerätes betreten und verlassen werden kann, sieht man also i.d.R. zwei solcher Erfassungssysteme z.B. an den jeweiligen Regalgangenden vor, so kann die Fehlerrate der Kommissionierung hierdurch weiter gesenkt werden. Bevortugterweise kann das Erfassungssystem für RFID auch fest an (zumindest) einem Ort des Lagers (etwa dem Punkt der Materialübergabe) installiert sein, was infolge der so geringeren nötigen Geräteanzahl zur Erfassung der RFID's kostengünstiger ist. Vorzugsweise ist der Abschluß eines einzelnen Kommissioniervorgangs an einem Lagerplatz über das erwähnte Datenerfassungsterminal zu bestätigen. Auch kann dies durch den lagerplatzanzeigenden Laserstrahl (oder allgemein Lichtstrahl) (etwa durch Reflexion dieses Strahls und deren Detektion) mittels einer so ausgelösten Systemrückmeldung oder einen anderen geeigneten (mobilen) Signalgeber (etwa einen Taster) als (für eine Rückmeldung geeignetes) Erfassungssystem geschehen. In diesen Fällen kann vorzugsweise die einzelne Kommissionierung an einem Lageplatz über das Erfassungssystem zwecks Rückmeldung bestätigt werden, um so die Neupositionierung des Lichtprojektors durch das Kommissionierleitsystem zu ermöglichen. Das der Rückmeldung dienende Erfassungssystem ist dabei vorzugsweise möglichst einfach gestaltet. Insbesondere muß es nicht unbedingt als Datenerfassungsterminal ausgebildet sein.

Nicht unerwähnt bleiben soll, daß alle Ausführungsformen des erfindungsgemäßen Verfahrens durch ein Computerprogramm realisiert und/oder ausgeführt werden können, das Instruktionen aufweist, die wenn es auf einem Computersystem abläuft, das erfindungsgemäße Verfahrens ausführt, vorzugsweise, wenn dies auf dem Computersystem zur Leitung der Kommissionierung von Lagerteilen im Lager mit mindestens einer Datenverarbeitungseinheit und mindestens einem Speicher geschieht. Auch kann ein Computerprogrammprodukt vorgesehen sein, welches ein computerlesbares Medium mit Computerprogramm-Code-Mitteln aufweist, bei dem jeweils nach Laden des Computerprogramms in einen Computer, dieser Computer durch das Programm zur Durchführung des erfindungsgemäßen Verfahrens veranlaßt wird. Gleiches gilt für ein Computerprogrammprodukt, welches ein Computerprogramm auf einem elektronischen Signal, etwa einem Trägersignal aufweist, bei dem jeweils nach Laden des Computerprogramms ein Computer, durch das Programm zur Durchführung des erfindungsgemäßen Verfahrens veranlaßt wird, eine Ausführungsform, die das Herunterladen des Computerprogramms etwa über ein Netzwerk wie das Internet ermöglicht oder unterstützt. Auch diese Varianten beziehen sich vorzugsweise auf einen Computer der zur Leitung der Kommissionierung von Lagerteilen im Lager mit mindestens einer Datenverarbeitungseinheit und mindestens einem Speicher vorgesehen ist.

Im Folgenden werden nicht einschränkend zu verstehende Ausführungsbeispiele anhand der Zeichnung besprochen. In dieser zeigen:
- Fig. 1: eine perspektivisch skizzierte Darstellung eines Lagers mit Regalgängen mit einem erfindungsgemäßen Kommissionierleitsystem vor Beginn eines Kommissioniervorganges,
- Fig. 2: eine weitere perspektivisch skizzierte Darstellung des Lagers nach Fig. **1** während der auf die Verhältnisse nach Fig. **1** folgenden Situation des Kommissioniervorganges,
- Fig. 3: abermals eine weitere skizzierte Darstellung des Lagers nach Fig. **1** während der auf die Verhältnisse nach Fig. **2** folgenden Situation des Kommissioniervorganges,
- Fig. 4: eine perspektivisch skizzierte Darstellung eines Lagers mit Regalgängen mit einem erfindungsgemäßen Kommissionierleitsystem vor Beginn eines Kommissioniervorganges wie nach Fig. **1**, jedoch mittels zusätzlicher Anzeige der Lagerplatzposition, und
- Fig. 5: eine weitere perspektivisch skizzierte Darstellung des Lagers nach Fig. **4** während der auf die Verhältnisse nach Fig. **4** folgenden Situation des Kommissioniervorganges.

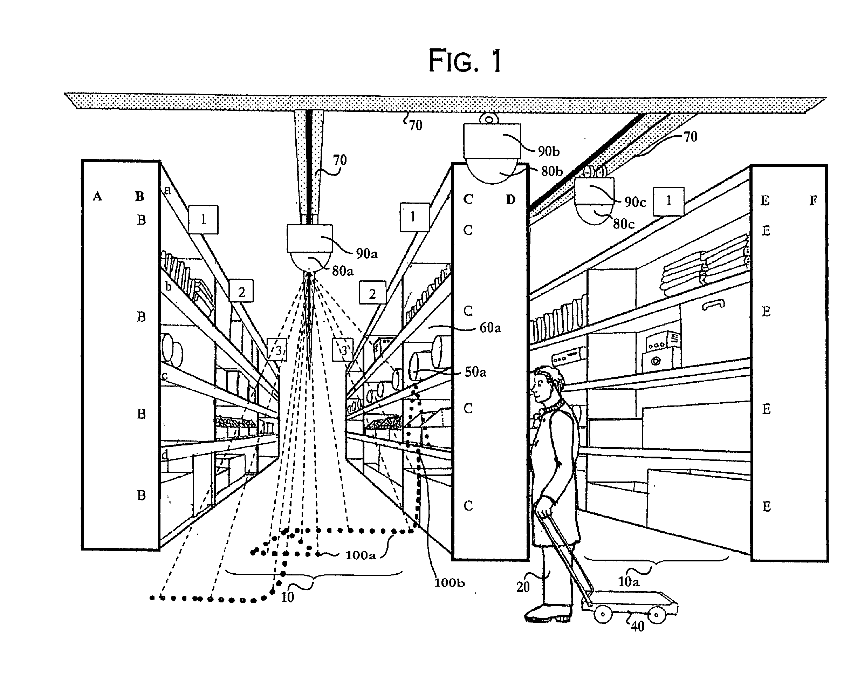

Fig. 1 zeigt eine perspektivisch skizzierte Darstellung eines Lagers mit Regalgängen, **10**, **10a** mit einem erfindungsgemäßen Kommissionierleitsystem vor Beginn eines Kommissioniervorganges.

Ein Kommissionierer **20** kommt mit einem noch leeren Kommissionierwagen **40** zum Lager, und zwar auf dem Weg zum ersten Lagerplatz **60a**, wo er zunächst das erste Lagerteil **50a** kommissionieren, d.h. hier entnehmen und auf seinen Kommissionierwagen **40** laden will. Dieser erste Lagerplatz **60a** befindet sich im ersten Regalgang 10 auf der rechten Regalseite - hier der mit C bezeichneten Regalseite - in der Regalfachzeile, die mit dem Buchstaben **b** (Beschriftung der Regalfachzeilen aus Darstellungs- und Übersichtlichkeitsgründen nur auf der linken Regalseite zu sehen) und der Regalfachspalte, die mit der Ziffer **1** bezeichnet ist. Dieser nächste zur Kommissionierung vorgesehene Lagerplatz **60a** befindet sich somit an der mit **C 1b** bezeichneten Stelle im Regal. Ein auf Schienen **70** mittels einer Verfahreinheit **90a** verfahrbarer Lichtprojektor 80a - hier ein Laserstrahlprojektor - wurde so positioniert, daß er einen Weg oder Richtungs- **100a** bzw. Ortshinweis **100b** zu dem nächsten Lagerplatz **60a** hin - hier auf den Fußboden, das Regal und schließlich den Lagerplatz **60a** selbst hin - projiziert, was vermittels eines Umlenkspiegels oder z.B. auf einem Stellmotor angebrachten (Dreh-)prismas im Projektor **80a**, **80b** und 80c schnell genug und als stehendes Bild zu bewerkstelligen ist. Prinzipiell können die Schienen **70** kurvenängig oder auch als Kreuzungen ausgeführt sein. Auch oder alternativ sind weitere - vorzugsweise ebenfalls auf Verfahreinheiten **90b**, **90c** angeordnete - Projektoren **80b** und **80c**, die die gleichen (zur Erhöhung der Kommissionierleistung in einem Regalgang) oder andere Lagerbereiche abdecken, installierbar. Diese sind ebenfalls in der Zeichnung zu erkennen. Sie können somit auf derselben oder weiteren Schienen **70** verfahrbar angeordnet sein und können somit ebenso wie der Projektor **80a** beweglich ausgeführt sein.

Auf diese Weise wird der Kommissionierer **20** zum nächsten - hier dem ersten - Lagerplatz **60a** zur dortigen Kommissionierung hin geleitet. Angesteuert und insbesondere positioniert wird der Lichtprojektor **80a** (direkt oder indirekt über weitere Zwischensysteme, wie etwa Positioniereinheiten mit Lageregelern oder dergleichen) durch das Computersystem (etwa einen Computer) zur Leitung der Kommissionierung von Lagerteilen im Lager.

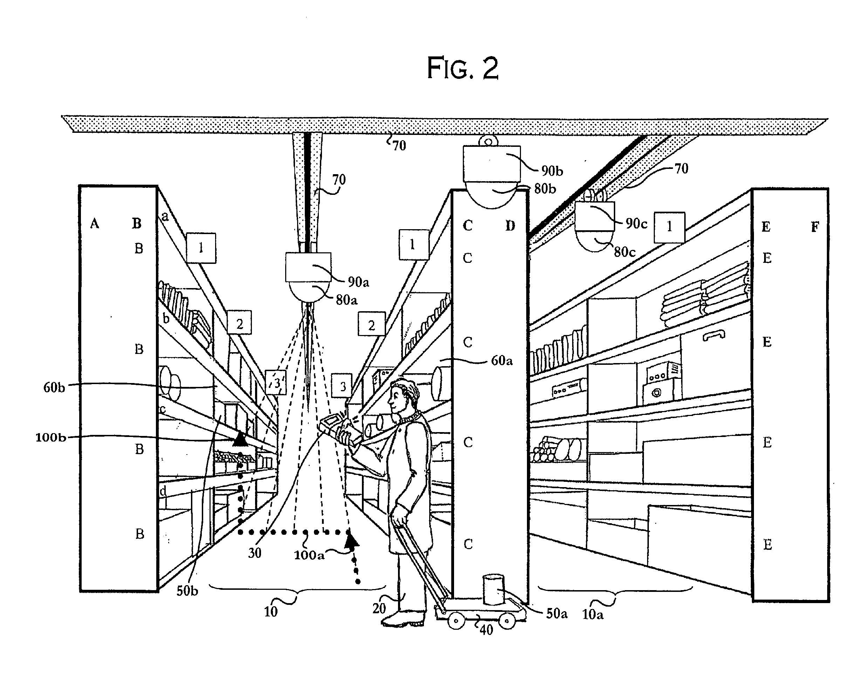

Fig. **2** zeigt eine weitere perspektivisch skizzierte Darstellung des Lagers nach Fig. **1** während der auf die Verhältnisse nach Fig. **1** folgenden Situation des Kommissioniervorganges.

Der Kommissionierer **20,** der mit einem Datenerfassungssystem 30 - hier einem drahtlosen Datenterminal zur manuellen Eingabe - ausgestattet ist, hat auf seinem Kommissionierwagen **40** nun das Lagerteil **50a** aufgeladen, das er zuvor an dem ersten Lagerplatz **60a** in Position **C 1b** entnommen hatte und diesen Kommissioniervorgang mithilfe des drahtlosen Datenterminals **30** bestätigt bzw. abgeschlossen. Je nach Anforderung im Einzelfall, kann anstatt eines Datenerfassungsterminals (oder auch zusätzlich hierzu) vorzugsweise auch ein anderes Erfassungssystem nach der vorliegenden Erfindung vorgesehen sein, also etwa ein System zur Reflexionsdetektion des projizierten Lichtstrahls oder auch ein Taster, der mit dem Computersystem (leitungsgebunden oder auch leitungslos [z.B. über Funk]) verbunden ist. Die Information über den Abschluß des Kommisioniervorganges an dieser Stelle wurde - vermittels des Erfassungssystems - an das Computersystem (etwa einen Computer) zur Leitung der Kommissionierung von Lagerteilen im Lager weitergeleitet, worauf dieses Computersystem feststellt, daß nun der nächste, nämlich der zweite Lagerplatz **60b** zur Entnahme eines dortigen weiteren Teils **50b** anzusteuern ist. Entsprechend hat es den Laserstrahlprojektor **80a** so angesteuert, daß er auch hierzu einen Weg- oder Richtungs- **100a** bzw. Ortshinweis **100b** zu diesem nächsten zweiten Lagerplatz **60b** hin ebenfalls auf den Fußboden, das Regal und schließlich den Lagerplatz **60b** selbst hin projiziert, was in der Regel mit einer Neupositionierung des Projektors, also mit Verfahren des Laserprojektors **80a** verbunden ist, jedoch nicht zwingend erfolgen muß, wenn die Positionsanzeige des neuen Entnahmefaches von der ursprünglichen Positionierung des Projektors ebenfalls erreicht werden kann. Sodann folgt der Kommissionierer **20** auf dem Weg zum nächsten zweiten Lagerplatz 60b, der sich im ersten Regalgang **10** auf der linken Regalseite - hier der mit **B** bezeichneten Regalseite - in der Regalfachzeile, die mit dem Buchstaben **b** und der Regalfachspalte, die mit der Ziffer **2** bezeichnet ist, befindet. Dieser nächste zur Kommissionierung vorgesehene zweite Lagerplatz **60b** befindet sich somit an der mit **B 2b** bezeichneten Stelle im Regal.

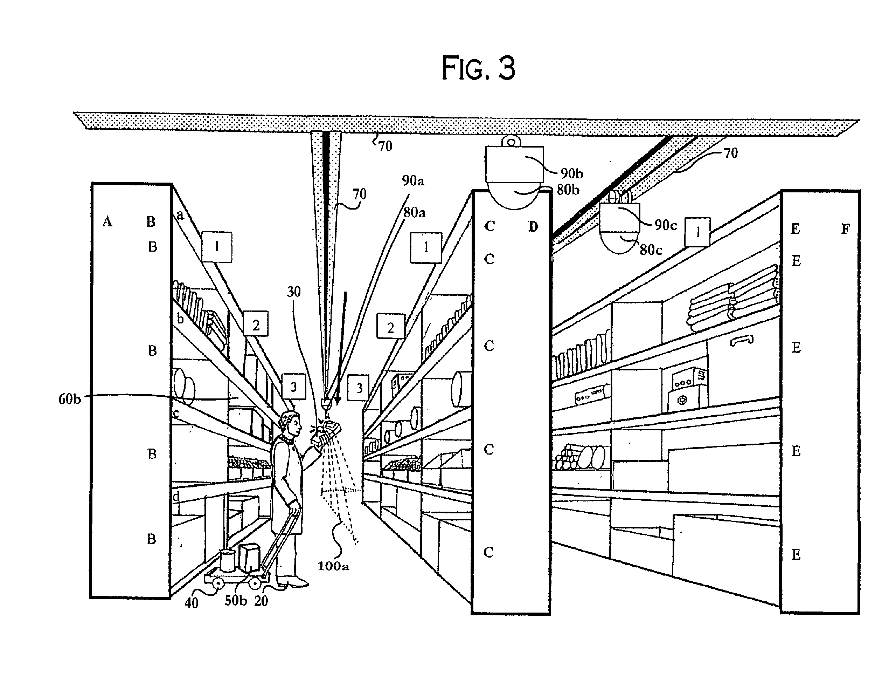

Fig. **3** zeigt abermals eine weitere skizzierte Darstellung des Lagers nach Fig. **1** während der auf die Verhältnisse nach Fig. **2** folgenden Situation des Kommissioniervorganges.

Der Kommissionierer **20**, der mit einem Datenerfassungssystem - hier etwa mit dem drahtlosen Datenterminal **30** zur manuellen Eingabe des Kommissioniervorganges - ausgestattet ist, hat auf seinem Kommissionierwagen **40** nun das zweite Lagerteil **50b** aufgeladen, das er zuvor an dem zweiten Lagerplatz **60b** in Position **B 2 b** entnommen und diesen Kommissioniervorgang mithilfe des drahtlosen Datenterminals **30** oder eines anderen geeigneten Erfassungssystems (etwa eines Reflexionsdetektors für den Licht-, insbesondere den Laserstrahl oder eines Tasters [siehe oben]) abgeschlossen bzw. bestätigt hatte. Diese Information wurde wiederum an den Computer zur Leitung der Kommissionierung von Lagerteilen im Lager weitergeleitet, worauf dieser nun feststellt, daß als nächster Lagerplatz ein solcher außerhalb des ersten Regalgangs **10** anzusteuern ist. Entsprechend hat es den auf Schienen **70** verfahrbaren Laserstrahlprojektor **80a** so positioniert, daß er auch hierzu einen Weg oder Richtungshinweis **100a** aus dem ersten Regalgangs **10** heraus in Richtung zum nächsten Lagerplatz auf den Fußboden hin projiziert, dem der Kommissionierer **20** folgen kann.

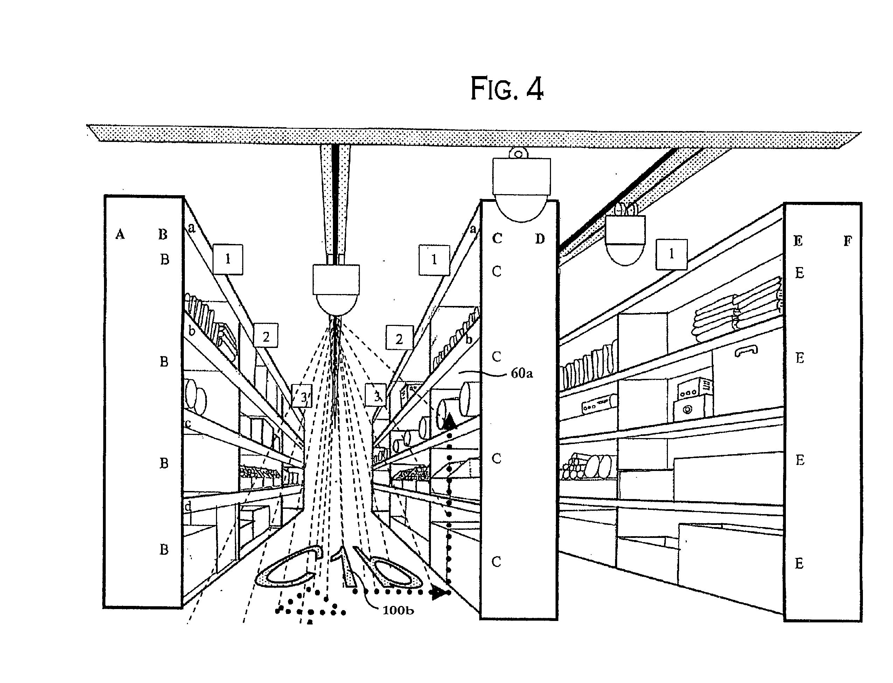

Fig. 4 zeigt eine perspektivisch skizzierte Darstellung eines Lagers mit Regalgängen mit einem erfindungsgemäßen Kommissionierleitsystem vor Beginn eines Kommissioniervorganges wie nach Fig. **1**, jedoch mittels zusätzlicher Anzeige der Lagerplatzposition **C 1 b** als Ortshinweis **100b** zu dem nächsten Lagerplatz **60a** hin hin. Ebenfalls denkbar ist die Projizierung der aus dem Lagerfach zu entnehmenden Artikelnummer oder die Anzahl der zu entnehmenden Teile.

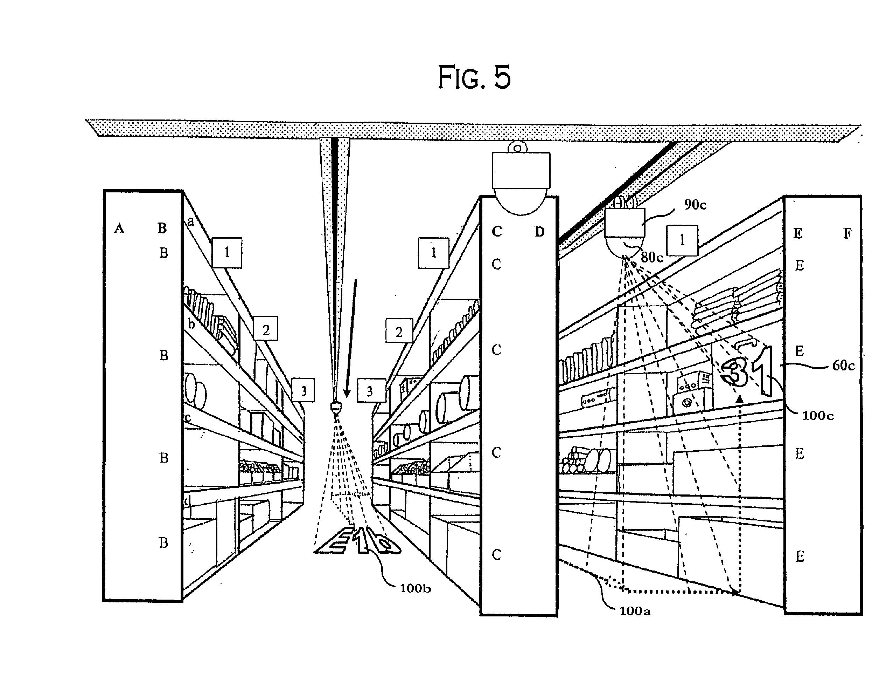

Fig.5 zeigt eine weitere perspektivisch skizzierte Darstellung des Lagers nach Fig. **4** während der auf die Verhältnisse nach Fig. **4** folgenden Situation des Kommissioniervorganges. Hier wird der Hinweis auf den (außerhalb des ersten Regalganges **10**, nämlich im zweiten Regalgang **10a)** liegenden nächsten, also dem dritten Lagerplatz **60c** auf den Boden projiziert und gibt dem Kommissionierer (hier nicht sichtbar) so den Ortshinweis zu diesem Lagerplatz **60c**. Der gleiche Projektor (wenn beispielsweise eine Schienenausführung als Kurven oder Verzweigungen für den Gangwechsel gewählt wurden) oder auch ein weiterer Projektor **80c** übernimmt nun im zweiten Regalgang **10a** die Hinweisprojektion **100a**, **100b** und projiziert darüber hinaus auch die aus dem dritten Lagerplatz **60c** an der Position **E 1 b** zu entnehmende Anzahl **100c** von Lagerteilen.

## Patentansprüche

1. Kommissionierleitsystem für ein Lager
- mit einem Computersystem zur Leitung der Kommissionierung von Lagerteilen (**50a**, **50b**) im Lager mit mindestens einer Datenverarbeitungseinheit und mindestens einem Speicher,
- mit einem Lichtprojektor (**80a**) oder mehreren Lichtprojektoren (**80a**, **80b**, **80c**), der jeweilig einen Lagerbereich abdeckt und der
- eine Anzeige eines Weges oder Richtungshinweises (**100a**) oder Ortshinweises (**100b**) zu einem Lagerplatz (**60a**, **60b**, **60c**) hin oder
- eine Anzeige des Lagerplatzes oder auf dem Lagerplatz (**100c**) oder an dem Lagerplatz (**60a**, **60b**, **60c**) oder
- eine Anzeige eines Weges oder Richtungshinweises (**100a**) oder Ortshinweises (**100b**) von dem Lagerplatz weg
projiziert, **dadurch gekennzeichnet, daß**
der jeweilige Lichtprojektor (**80a**, **80b**, **80c**) zur Abdeckung des Lagerbereiches beweglich ist und während der Kommissionierung im Lager durch das Computersystem zur Leitung der Kommissionierung von Lagerteilen (**50a**, **50b**) im Lager direkt oder indirekt so angesteuert wird, daß der Lichtprojektor (**80a**, **80b**, **80c**) so positioniert, daß er die zur Kommissionierung von Lagerteilen (**50a**, **50b**) jeweilig vorgesehene Weganzeige (**100a**) oder den jeweiligen Richtungs- (**100a**) oder Ortshinweis (**100b**) zu dem Lagerplatz (**60a**, **60b**, **60c**) hin oder von dem Lagerplatz (**60a**, **60b**, **60c**) weg oder die Anzeige des Lagerplatzes oder die Anzeige auf **(100c)** oder an dem Lagerplatz erkennbar projizieren kann.

2. Kommissionierleitsystem nach Anspruch 1, **dadurch gekennzeichnet, daß** der Lichtprojektor (**80a**, **80b**, **80c**) als Anzeige auf dem Lagerplatz (**60a**, **60b**, **60c**) oder an dem Lagerplatz (**60a**, **60b**, **60c**) zusätzliche Informationen (**100c**), wie den zu entnehmenden Artikel oder die Anzahl der zu kommissionierenden Teile (**100c**) projiziert.

3. Kommissionierleitsystem nach Anspruch 1 oder 2, **dadurch gekennzeichnet, daß** als Lichtprojektor (**80a**, **80b**, **80c**) ein Projektionssystem mit einer Laserstrahlquelle vorgesehen ist.

4. Kommissionierleitsystem nach Anspruch 1, 2 oder 3, **dadurch gekennzeichnet, daß** als Projektionssystem mit einer Laserstrahlquelle (**80a**, **80b**, **80c**) eine auf einer Verfahreinheit (**90a**, **90b**, **90c**) angeordnete Laserstrahlquelle (**80a**, **80b**, **80c**) mit zumindest einem Umlenkprisma oder Umlenkspiegel vorgesehen ist.

5. Kommissionierleitsystem nach Anspruch 4, **dadurch gekennzeichnet, daß** die Verfahreinheit (**90a**, **90b**, **90c**) auf einer Schiene **(7**0**)** angeordnet ist, entlang der die Verfahreinheit (**90a**, **90b**, **90c**) positioniert werden kann.

6. Kommissionierleitsystem nach Anspruch 5, **dadurch gekennzeichnet, daß** die Schiene (70) so angeordnet ist, daß der Lichtstrahl des auf der Verfahreinheit (**90a**, **90b**, **90c**) auf der Schiene (**70**) angeordneten Projektionssystems (**80a**, **80b**, **80c**) den jeweiligen Lagerplatz (**60a**, **60b**, **60c**) direkt anstrahlen kann.

7. Kommissionierleitsystem nach Anspruch 5 oder 6, **dadurch gekennzeichnet, daß** die Schiene (70) an der Decke eines Lagers montiert ist.

8. Kommissionierleitsystem nach einem der Ansprüche 1 bis 7, **dadurch gekennzeichnet, daß** das Kommissionierleitsystem auch ein Erfassungssystem **30** für die Erfassung der jeweils an dem Lagerplatz (**60a**, **60b**, **60c**) kommissionierten Lagerteile (**50a**, **50b**) aufweist, das mit dem Computersystem zur Leitung der Kommissionierung von Lagerteilen im Lager unmittelbar oder mittelbar über eine Verbindung, vorzugsweise eine Datenverbindung, besonders bevorzugterweise über eine Datenleitung oder ein Datennetzwerk kommuniziert.

9. Kommissionierleitsystem nach Anspruch 8, **dadurch gekennzeichnet, daß** als Erfassungssystem ein Datenterminal (**30**) vorgesehen ist.

10. Kommissionierleitsystem nach Anspruch 9, **dadurch gekennzeichnet, daß** das Datenterminal (**30**) eine manuelle Eingabemöglichkeit aufweist.

11. Kommissionierleitsystem nach Anspruch 9 oder 10, **dadurch gekennzeichnet, daß** das Datenterminal (**30**) ein Lese- oder Schreibgerät für eine Chipkarte-, Magnetkarte oder ein elektronisch lesbares Etikett oder einen RFID-Transponder aufweist.

12. Kommissionierleitsystem nach einem der Ansprüche 9, 10 oder 11, **dadurch gekennzeichnet, daß** das Datenterminal (30) über eine drahtlose Verbindung mit dem Computersystem zur Leitung der Kommissionierung von Lagerteilen im Lager kommuniziert.

13. Kommissionierleitsystem nach einem der Ansprüche 8 bis 12 **dadurch gekennzeichnet, daß** als Erfassungssystem ein Lese- oder Schreibgerät für RFID-Transponder vorgesehen ist.

14. Kommissionierleitsystem nach Anspruch 13, **dadurch gekennzeichnet, daß** als Lager ein Lager mit Regalgängen (**10**, **10a**) und als Erfassungssystem (30) ein solches mit zumindest einem Lese- oder Schreibgerät für RFID-Transponder vorgesehen ist, das zumindest an einem Ort des Lagers, vorzugsweise am Punkt der Materialübergabe, angeordnet ist.

15. Kommissionierleitsystem nach Anspruch **14**, **dadurch gekennzeichnet, daß** als Lager ein Lager mit Regalgängen (**10**, **10a**) und als Erfassungssystem (**30**) ein solches mit zumindest einem Lese- oder Schreibgerät für RFID-Transponder vorgesehen ist, das jeweils an zumindest einem Zugang eines Regalganges angeordnet ist

16. Kommissionierleitsystem nach einem der Ansprüche 8 bis 15 **dadurch gekennzeichnet, daß** als Erfassungssystem (**30**) ein Reflexionsdetektor für den ursprünglich vom Lichtprojektor (**80a**, **80b**, **80c**) ausgehenden Lichtstrahl vorgesehen ist.

17. Kommissionierleitsystem nach einem der Ansprüche 8 bis 16 **dadurch gekennzeichnet, daß** als Erfassungssystem (**30**) ein mobiler Signalgeber, vorzugsweise ein Taster vorgesehen ist.

18. Verfahren zur Kommissionierung von in einem Lager befindlichen Lagerteilen mit einem Kommissionierleitsystem nach einem der Ansprüche 1 bis 17, **dadurch gekennzeichnet, daß** jeweils vor der Kommissionierung des am nächsten Lagerplatz (**60b**, **60c**) zu kommissionierenden Lagerteiles oder der dort nächst zu kommissionierenden Lagerteile (**50b**) der zur Abdekkung eines Lagerbereiches bewegliche Lichtprojektor (**80a**) durch das Computersystem zur Leitung der Kommissionierung unmittelbar oder mittelbar so angesteuert wird, daß er so positioniert wird, daß er die zum nächsten Lagerplatz (**60b**, 60c) jeweilig vorgesehene Weganzeige (**100**a**)** oder den jeweiligen Richtungs- (**100**a**)** oder Ortshinweis (**100**b**)** zum nächsten Lagerplatz (**60b**, **60c**) hin oder von einem aktuellen Lagerplatz (**60a**) weg oder die Anzeige des nächsten Lagerplatzes oder die Anzeige auf oder an dem nächsten Lagerplatz (**100**c**)** erkennbar projizieren kann.

19. Verfahren zur Kommissionierung von in einem Lager befindlichen Teilen nach Anspruch 18 mit einem Kommissionierleitsystem nach einem der Ansprüche 8 bis 16, **dadurch gekennzeichnet, daß** eine Kommissionierung des an einem Lagerplatz (**60a**, **60b**, **60c**) zu kommissionierenden Lagerteils oder der dort zu kommissionierenden Lagerteile (**50a**, **50b**) mithilfe des Erfassungssystems (**30**) abgeschlossen und an das Computersystem zur Leitung der Kommissionierung von Lagerteilen im Lager gemeldet wird, das daraufhin den beweglichen Lichtprojektor (**80a**, **80b**, **80c**) unmittelbar oder mittelbar so ansteuert, daß er so positioniert wird, daß er die zum nächsten Lagerplatz jeweilig vorgesehene Weganzeige (**100a**) oder den zumindest einen jeweiligen Richtungs- (**100a**) oder Ortshinweis (**100b**) zum nächsten Lagerplatz (**60b**, **60c**) hin oder von dem aktuellen Lagerplatz (**60a**) weg oder die Anzeige des nächsten Lagerplatzes oder die Anzeige auf oder an dem nächsten Lagerplatz (**100c**) erkennbar projizieren kann.

20. Verfahren zur Kommissionierung von in einem Lager befindlichen Teilen nach Anspruch 18 oder 19, **dadurch gekennzeichnet, daß** der Lichtprojektor (**80a**, **80b**, **80c**), nachdem er so positioniert wurde, daß er die zum nächsten Lagerplatz (**60b**, **60c**) jeweilig vorgesehene Weganzeige (**100a**) oder den zumindest einen jeweiligen Richtungs- (**100a**) oder Ortshinweis (**100b**) zum nächsten Lagerplatz (**60b**, **60c**) hin oder von dem aktuellen Lagerplatz (**60a**) weg oder die Anzeige des nächsten Lagerplatzes oder die Anzeige auf oder an dem nächsten Lagerplatz (**100c**) erkennbar projizieren kann,
- eine Anzeige eines Weges oder Richtungshinweises (**100a**) oder Ortshinweises (**100b**) zu einem Lagerplatz (**60a**, **60b**, **60c**) hin oder
- eine Anzeige des Lagerplatzes oder auf dem Lagerplatz (**100c**) oder an dem Lagerplatz (**60a**, **60b**, **60c**) oder
- eine Anzeige eines Weges oder Richtungshinweises (**100a**) oder Ortshinweises (**100b**) von dem Lagerplatz weg
projiziert.

21. Verfahren zur Kommissionierung von in einem Lager befindlichen Teilen nach einem der Ansprüche 18 bis 20, **dadurch gekennzeichnet, daß** der Lichtprojektor (**80a**, **80b**, **80c**) auf dem nächsten Lagerplatz (**60b**, **60c**) oder an dem nächsten Lagerplatz (**60b**, **60c**) die Anzahl der dort zu kommissionierenden Lagerteile (**100c**) projiziert.

22. Verfahren zur Kommissionierung von in einem Lager befindlichen Teilen nach einem der Ansprüche 18 bis 21, **dadurch gekennzeichnet, daß** der Lichtprojektor (**80a**, **80b**, **80c**) auf dem nächsten Lagerplatz (**60b**, **60c**) oder an dem nächsten Lagerplatz (**60b**, **60c**) zusätzliche Informationen, vorzugsweise die Artikelnummer der zu kommissionierenden Lagerteile projiziert.

23. Verfahren zur Kommissionierung von in einem Lager befindlichen Teilen nach einem der Ansprüche 18 bis 22, **dadurch gekennzeichnet, daß** als Kommissionierung an dem nächsten Lagerplatz (**60b**, **60c**) eine Entnahme von einem Lagerteil oder mehreren Lagerteilen (**50a**, **50b**) aus dem Lager stattfindet, die von dem Erfassungssystem (**30**) erfaßt wird.

24. Verfahren zur Kommissionierung von in einem Lager befindlichen Teilen nach einem der Ansprüche 18 bis 23, **dadurch gekennzeichnet, daß** als Kommissionierung an dem nächsten Lagerplatz (**60a**, **60b**, **60c**) ein Einstellen oder Einlegen von einem Lagerteil oder mehreren Lagerteilen (**50a**, **50b**) in das Lager stattfindet, das von dem Erfassungssystem (**30**) erfaßt wird.

25. Computerprogramm, das Instruktionen aufweist, das, wenn es auf einem Computersystem abläuft, das Verfahrens nach einem der Ansprüche 18 bis 24 ausführt.

26. Computerprogrammprodukt welches ein computerlesbares Medium mit Computerprogramm-Code-Mitteln aufweist, bei dem jeweils nach Laden des Computerprogramms ein Computer durch das Programm zur Durchführung des Verfahren nach einem der Ansprüche 18 bis 24 veranlaßt wird.

27. Computerprogrammprodukt, welches ein Computerprogramm auf einem elektronischen Signal, vorzugsweise einem Trägersignal, aufweist, bei dem jeweils nach Laden des Computerprogramms ein Computer durch das Programm zur Durchführung des Verfahrens nach einem der Ansprüche 18 bis 24 veranlaßt wird.
